(19) **Europäisches Patentamt / European Patent Office / Office européen des brevets**

(11) **EP 2 894 751 A1**

(12) **EUROPEAN PATENT APPLICATION**
published in accordance with Art. 153(4) EPC

(43) Date of publication:
**15.07.2015 Bulletin 2015/29**

(51) Int Cl.:
**H02J 3/18** *(2006.01)*

(21) Application number: **13835184.6**

(22) Date of filing: **14.06.2013**

(86) International application number:
**PCT/RU2013/000489**

(87) International publication number:
**WO 2014/038976 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.09.2012 RU 2012137853**

(71) Applicant: **Bryantsev, Alexander Mikhailovich Moscow 111116 (RU)**

(72) Inventor: **Bryantsev, Alexander Mikhailovich Moscow 111116 (RU)**

(74) Representative: **Hoffmann Eitle Patent- und Rechtsanwälte PartmbB Arabellastraße 30 81925 München (DE)**

(54) **STATIC REACTIVE POWER COMPENSATOR**

(57)   This invention relates to electrical engineering and is particularly suitable for use as a controlled system to regulate and automatically stabilize voltage and to compensate for reactive power in high-voltage power systems irrespective of the voltage class.

The object of the present invention is to increase the efficiency and reliability of the static reactive power compensator equipment by extending the continuous capacity control range from rated capacitive to rated inductive, reducing installed capacity of the capacitor banks and eliminating overload of the filtering devices by higher harmonics

This object is accomplished by the static reactive power compensator which includes a controlled inductor, a capacitor bank and a higher harmonic filtering device and in which, according to the invention, the controlled inductor is, essentially, a double-winding transformer with a core saturation control circuit, wherein the rated input resistance of the transformer is 1.5 to 6 times as high as the sum of the inductive resistances of the windings thereof adjusted to the rated voltage, and a higher harmonic filtering device is, essentially, a filter compensating device the rated capacity of which is one tenth to half of the rated capacity of the capacitor bank, and the sum of rated capacities of the filter compensating device and the capacitor bank connected to the low-voltage secondary winding equals the rated transformer capacity.

As compared with the prior art and closest prior art, the claimed invention has an extended range of continuous capacity control, - from the rated capacitive mode to the rated inductive mode without disconnecting the capacitor bank, a lower installed capacity of the capacitor banks, a practically sinusoidal current and no filter device overload by higher harmonics.

Working efficiency of the claimed static reactive power compensator is verified by calculations, physical and mathematical simulation and dummy testing.

*Fig. 2*

**Description**

This invention relates to electrical engineering and is particularly suitable for use as a controlled system to regulate and automatically stabilize voltage and to compensate for reactive power in high-voltage power systems irrespective of the voltage class.

Known in the art are means to regulate and automatically stabilize voltage and compensate for reactive power in power systems, i.e., static thyristor-controlled compensators (STCs) /1/. A disadvantage of such STCs, which are analogous art to the claimed invention, is that it is impossible to design them at a voltage of 110 KV or higher. As a result, the need for a step-up transformer as a component part of the STC for a power system of 110 KV or higher degrades the cost indicator of the device. Another expensive component of the prior art STC is a reactor-thyristor group serving as a controlled inductor and equaling in capacity to the rated STC capacity. Besides, the STC has a stepwise continuous regulation curve. In the capacitive mode, the transformer secondary winding is connected both to the capacitor bank and reactor-thyristor group. Continuity of the regulation curve in this case is provided by compensating for power of the capacitor bank controlled by the reactor-thyristor group. STC switch-over to the inductive mode requires that the capacitor bank be disconnected inasmuch as the reactor-thyristor group features no overload capacity in excess of the rated value wherefore the STC regulation curve is stepwise. The capacitor bank has to switch over in response to each transition from the inductive mode to the capacitive mode whereby voltage disturbances are caused in the power system degrading device reliability.

The aforesaid disadvantages are partially eliminated in the static reactive power compensator which is the closest prior art of the claimed invention /2/. This compensator includes a regulated inductor in the form of a controlled shunt reactor, a capacitor bank and fifth and seventh harmonic filters. The controlled shunt reactor of the closest prior art combines the functions of a transformer and a reactor-thyristor group whereby its functionalities and technical-economic indicators are improved as compared with the prior art.

However, the closest prior art has some disadvantages caused by the fact that the short-circuit value range of all currently manufactured double-winding controlled shunt reactors falls within /3 /:

$$0.3 < U^*{}_{SC\,CSR} < 0.5 , \qquad (1)$$

where: $U^*{}_{SC\,CSR}$ is a short-circuit voltage of the double-winding controlled shunt reactors.

High, as compared with the transformers, $U^*{}_{SC\,CSR}$ causes substantial voltage increase across the secondary winding thereof when the capacitor bank is connected and as a result installed capacity has to be increased in respect of the rated capacitive power of the closest prior art approximately by a factor of:

$$(1+U^*{}_{SC\,CSR})^2 = 1.7\text{-}2.25 \qquad (2).$$

The increased values of $U^*{}_{SC\,CSR}$ also limits maximum power consumed by the controlled shunt reactor to 1.3 - 1.5 of its rated value, which makes it impossible, like in the STC, for the closest prior art to switch over from the rated capacitive mode to the rated inductive mode without disconnecting the capacitor bank. Owing to high values of the installed capacity of the capacitor bank and controlled shunt reactor overload not exceeding 1.3 - 1.5 of the rated value, the capacitor bank capacity does not exceed 5 - 15% of the rated power of the controlled shunt reactors /3/. Another disadvantage of the closest prior art is the use of higher fifth and seventh harmonic filters as filtration devices. The filters fine tuned to resonance tend, on the one hand, to be overloaded by filtered current harmonics while, on the other hand, small frequency variations in the power system cause abrupt decrease in the filtering properties of the filters. As a result, reliability and efficiency of the devices are decreased.

Accordingly, it is an object of the present invention to increase the efficiency and reliability of the static reactive power compensator equipment by extending the continuous capacity control range from rated capacitive to rated inductive, reducing installed capacity of the capacitor banks and eliminating overload of the filtering devices by higher harmonics.

This object is accomplished by the static reactive power compensator which includes a controlled inductor, a capacitor bank and a higher harmonic filtering device and in which, according to the invention, the controlled inductor is, essentially, a double-winding transformer with a core saturation control circuit, wherein the rated input resistance of the transformer is 1.5 to 6 times as high as the sum of the inductive resistances of the windings thereof adjusted to the rated voltage, and a higher harmonic filtering device is, essentially, a filter compensating device the rated capacity of which is one tenth to half of the rated capacity of the capacitor bank, and the sum of rated capacities of the filter compensating device and the capacitor bank connected to the low-voltage secondary winding equals the rated transformer capacity.

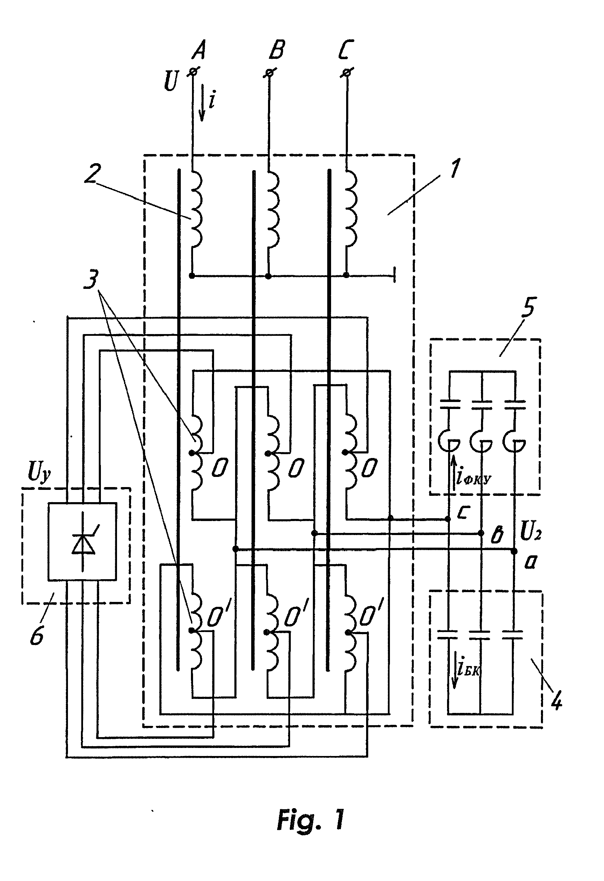

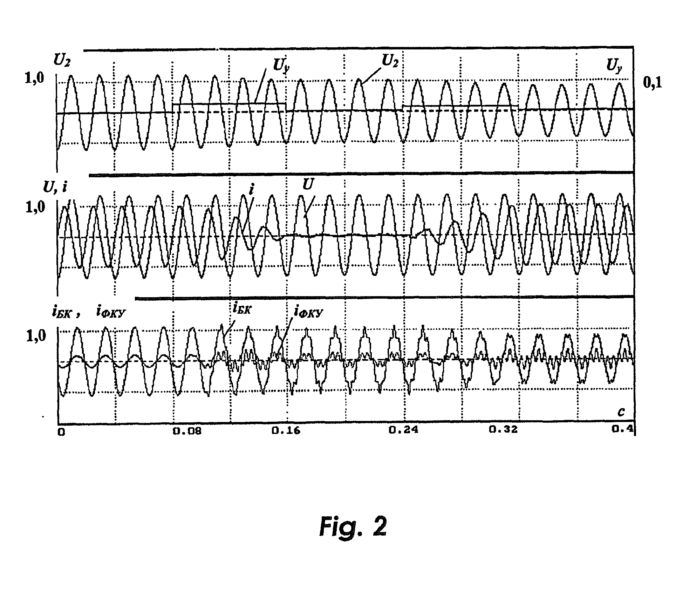

Now the claimed device will be described with reference to a specific embodiment thereof taken in conjunction with the accompanying drawings, in which Fig. 1 is a schematic and Fig. 2 illustrates characteristic current and voltage oscillograms. The device according to the invention includes a double-winding controlled saturation transformer 1 having a star-connected primary winding 2 with its leads A, B, C connected to the rated voltage of the high-voltage power system and a delta-connected secondary winding 3 which is sectionalized in two parallel branches with center taps. The delta corners a, б, c of the secondary winding 3 are connected to a capacitor bank 4 and a filter compensating device 5, while the center taps OO' of the secondary winding 3 are connected to a saturation control circuit 6.

The claimed invention operates as follows. When the transformer primary winding 1 is connected to the power system voltage $U_1$ and the control voltage $U_{Ctl}$ of the saturation control circuit 6 is zero, the device operates to generate a rated capacitive power equaling an aggregate capacity of the capacitor bank 4 and the filter compensating device 5, which power is transmitted to the power system through the secondary 3 and primary 2 windings of the transformer 1. The capacitive power thus transmitted to the power system equals the rated power of the transformer 1.

The rated capacitive power generation mode of Fig. 2 corresponds to the time interval from 0.0 to 0.08 s. It is apparent that the device current i leads the rated voltage U of the primary winding 2 by 90 degrees and has a sinusoidal shape, which shape is also exhibited by the secondary winding voltage $U_2$, the current $i_{CB}$ of the capacitor bank 4 and the current $i_{FCD}$ of the filer compensating device 5. As the saturation control circuit 6 generates the control voltage $U_{Ctl}$ between the center taps OO' of the secondary winding 3 the transformer 1 core starts to be saturated and a transient process of the claimed device power change arises. During the time interval 0.08 - 0.16 s (Fig. 2) transition from the rated capacitive mode to the zero power mode occurs due to the increase in saturation of the transformer 1 core. $U_{Ctl}$ decrease approximately to zero maintains the zero power mode unchanged within 0.08 - 0.16 s. Repeated application of the voltage $U_{Ctl}$ from the saturation control circuit 6 to the center taps OO' of the secondary winding 3 causes inductive component growth in the primary winding current $i_1$ (cf. time interval of 0.16 - 0.32 s) until the rated inductive mode is set up (cf. time interval of 0.32 - 0.4 s). The transient process duration in the device is inversely proportional to the $U_{Ctl}$ DC component. As apparent from the oscillograms of Fig. 2, when the ratio of $U_{Ctl}$ to $U_2$ is of the order of 0.02 - 0.03, the duration of transition from the rated mode to the zero mode or back is not in excess of 0.1 s. When the control voltage $U_{Ctl}$ approximates zero, the transient process ceases and the mode (e.g., the zero or rated capacitive power or rated inductive power mode) remains on for an indefinite period of time (cf. time intervals of 0.00 - 0.08 s, 0.16 - 0.24 s and 0.32 - 0.4 s of Fig. 2). When the control voltage $U_{Ctl}$ is negative, the reverse transition from the inductive to capacitive power takes place and any steady-state mode (from the rated capacitive to the rated inductive mode) may be set up. Relative capacity of the saturation control circuit 6 is proportional to the ratio $U_{Ctl} / U_2$ and does not exceed 2 - 3 percent of rated capacity of the transformer 1.

The oscillograms of Fig. 2 show that the current i has a practically sinusoidal waveform within the entire control range, while all higher harmonics conditioned by the transformer 1 saturation are closed in the filter compensating device 5. In this case not only distortions are removed from the transformer 1 primary current, but the capacitor bank 4 is also protected against higher harmonics of the current. As apparent from the oscillograms of Fig. 2, any higher harmonic in the current $i_{CB}$ of the capacitor bank is much less than the fundamental harmonic thereof. High efficiency of the filter compensating device 5 also provides a practically sine waveform of the voltage $U_2$ of the secondary winding 3 (cf. Fig. 2) whereby any limitations to connection of an active load (e.g., balance of plant) to such winding are removed.

Stepless capacity control from the rated capacitive to the rated inductive mode and vice versa is provided owing to different approaches to the design of the controlled shunt reactor, which is part of the closest prior art, and the controlled saturation transformer incorporated in the claimed invention. Specifically, the controlled shunt reactor, which is part of the closest prior art, is first and foremost designed as a controlled inductor the geometrical dimensions of which are selected subject the requirement of equality between its rated input resistance and the sum of resistances of the power winding and the control winding adjusted to the primary voltage in order to provide the so called half-wave or half-maximal saturation mode /4/:

$$X_{CSR} /(X_{PW} + X'_{CW}) = 1; \qquad (3)$$

where: $X_{CSR}$ is the rated input resistance; $X_{PW}$, $X'_{CW}$ are the inductive resistances of the power winding and the control winding adjusted to the rated voltage.

This is just the reason of the increased $U^*_{SC\ CSR}$ value and the aforesaid disadvantages of the closest prior art.

In the claimed device, the transformer 1 is first and foremost calculated as a transformer which has the rated capacitive load and the short-circuit voltage, $U^*_{SC}$, values of which are typical for general purpose power transformers /5/:

$$0.05 < U^*_{SC} < 0.25 , \qquad (4)$$

and at the same time the rated resistance of such transformer exceeds the sum of inductive resistances of the windings:

$$1,5 < X_R / (X_1 + X'_2) < 6, \qquad (5)$$

where: $X_R$ is the rated resistance of the claimed device; $X_1$, $X'_2$ are inductive resistances of the transformer primary winding and the transformer secondary winding adjusted to the primary voltage.

Meeting conditions (4) and (5) in the transformer *1* increases efficiency of the capacitor bank installed capacity and provides smooth transition of the claimed devices from the rated capacitive mode to the rated inductive mode.

The filter compensating device, as distinct from the fifth and seventh harmonic filters of the closest prior art, operates as a wide-band filter which is not fine tuned to any filterable harmonic. A rated capacity selection criterion is the excess of the rated value over the peak value of any filterable harmonic whereby the possibility of overload by higher harmonics is ruled out. A practicable technical-economic range of the relative capacity of the filter compensating device varies from one tenth to half of capacity of the capacitor bank.

As compared with the prior art and closest prior art, the claimed invention has an extended range of continuous capacity control, - from the rated capacitive mode to the rated inductive mode without disconnecting the capacitor bank, a lower installed capacity of the capacitor banks, a practically sinusoidal current and no filter device overload by higher harmonics.

Another advantage of the claimed invention consists in that it can be used without the capacitor bank to serve as a controlled shunt reactor which can be connected to the active load secondary winding.

Working efficiency of the claimed static reactive power compensator is verified by calculations, physical and mathematical simulation and dummy testing.

**Claims**

1. static reactive power compensator including a controlled inductor, a capacitor bank and a higher harmonic filtering device *characterized in that* said controlled inductor is, essentially, a double-winding transformer with a core saturation control circuit, wherein the rated input resistance of the transformer is 1.5 to 6 times as high as the sum of the inductive resistances of the windings thereof adjusted to the rated voltage, and a higher harmonic filtering device is, essentially, a filter compensating device the rated capacity of which is one tenth to half of the rated capacity of the capacitor bank, and the sum rated capacities of the filter compensating device and the capacitor bank connected to the low-voltage secondary winding equals the rated transformer capacity.

**Fig. 1**

**Fig. 2**

## INTERNATIONAL SEARCH REPORT

| | International application No. |
|---|---|
| | PCT/RU 2013/000489 |

**A.    CLASSIFICATION OF SUBJECT MATTER**

H02J 3/18 (2006.01)

According to International Patent Classification (IPC) or to both national classification and IPC

**B.    FIELDS SEARCHED**

Minimum documentation searched (classification system followed by classification symbols)

H02J 3/01,3/18-3/22

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet

**C.    DOCUMENTS CONSIDERED TO BE RELEVANT**

| Category* | Citation of document, with indication, where appropriate, of the relevant passages | Relevant to claim No. |
|---|---|---|
| A | RU 2282912 C2 (BRYANTSEV ALEKSANDR MIKHAILOVICH) 27.08.2006 | 1 |
| A | WO 2008/141963 A2 (ABB TECHNOLOGY AG et al.) 27.11.2008 | 1 |
| A | CN 201413766 Y (ZHENGZHOU JINYANG ELECTRIC CO., LTD) 24.02.2010 | 1 |
| A | CN 1881730 A (XI'AN HUIFENG ELECTRIC POWER EQUIPMENT CO., LTD) 20.12.2006 | 1 |

☐   Further documents are listed in the continuation of Box C.          ☐          See patent family annex.

| | |
|---|---|
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 25 October 2013 (25.10.2013) | 21 November 2013 (21.11.2013) |

| Name and mailing address of the ISA/ RU | Authorized officer |
|---|---|
| Facsimile No. | Telephone No. |

Form PCT/ISA/210 (second sheet) (April 2005)